# EUROPEAN PATENT APPLICATION

(11) **EP 2 432 229 A2**
(43) Date of publication of application: **21.03.2012**
(21) Application number: 10196985.5
(22) Date of filing: 24.12.2010
(51) Int. Cl.: H04N 13/00

(54) **Object tracking and highlighting in stereoscopic images**

(30) Priority: 20.09.2010 US 886503
(71) Applicant: Cisco Technology, Inc., San Jose, CA 95134-1706 (US)
(72) Inventor: Chu, Joseph Yao Hua, San José, CA 95124 (US)
(74) Representative: Kazi, Ilya

(57) **Abstract**

A technique for tracking and highlighting an object in stereoscopic images by changing the depth of the object is disclosed. A stereoscopic image is processed using an object detection algorithm to select the pixels associated with the object in the image. The depth of the object is adjusted in the stereoscopic image by adjusting the disparity between the pixels associated with the object in the left and right stereoscopic image pair. The processed stereoscopic image is then displayed on a stereoscopic display or stored in memory. An object is tracked by highlighting the object in consecutive stereoscopic images that depict the object.

## Description

### BACKGROUND OF THE INTENTION

### Field of the Invention

The invention relates generally to the field of stereoscopic imagery and, more specifically, to object tracking and highlighting in stereoscopic images.

### Description of the Related Art

Stereoscopic images add depth to a viewer's perspective using disparity between the images projected to the left and right retinas. Sometimes, for a variety of reasons, focusing the viewer's attention on a particular object within the stereoscopic image is desirable. In such instances, some sort of graphical overlay is added to the image or the object is altered, to draw the viewer's attention to the object. For example, a rectangle or other shape may be drawn around the object so that the viewer can more easily identify the object within the image, or the object may be colored or highlighted in some fashion to bring the object to the viewer's attention.

One drawback to these approaches is that adding a graphical overlay or altering the object necessarily changes the content of the image. Graphical overlays may cover aspects of the image that the viewer wishes to see. Similarly, altering the object may prevent the viewer from seeing the object in its true state. Additionally, viewers may find the graphical overlay or alteration of the object distracting, thereby taking the focus of the viewer away from the object and directing the viewer's focus toward the particular technique employed.

As the foregoing illustrates, what is needed in the art is an improved approach for tracking or highlighting an object in a stereoscopic image.

Aspects of the invention are set out in the independent claims and preferred features are set out in the dependent claims.

### BRIEF DESCRIPTION OF THE FIGURES

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 illustrates an example system configured to implement one or more aspects of the present invention;

Figure 2A illustrates a stereoscopic image, according to one example embodiment of the invention;

Figure 2B illustrates a modified stereoscopic image, according to one example embodiment of the invention;

Figure 3 is a flow diagram of method steps for highlighting an object in a stereoscopic image, according to one example embodiment of the invention; and

Figures 4A-4D illustrate various techniques for adjusting the depths of objects in a stereoscopic image, according to different example embodiments of the invention.

For clarity, identical reference numbers have been used, where applicable, to designate identical elements that are common between figures. It is contemplated that features of any of the example embodiments may be incorporated in other embodiments without further recitation.

### DESCRIPTION OF EXAMPLE EMBODIMENTS

In the following description, numerous specific details are set forth to provide a more thorough understanding of various embodiments of the invention. However, it will be apparent to one of skill in the art that certain embodiments of the invention may be practiced without one or more of these specific details. In other instances, well-known features have not been described in order to avoid obscuring the invention.

### Overview

One embodiment of the present invention sets forth a method for calling attention to an object in a stereoscopic image that includes a left image and a right image. The method includes the steps of selecting the object within the stereoscopic image, generating a modified left image by moving the object by a left offset distance from an initial position within the left image, and generating a modified right image by moving the object by a right offset distance from an initial position within the right image. The method also includes the step of generating a modified stereoscopic image based on the modified left image and the modified right image, where a perceived depth of the object within the stereoscopic image changes on account of moving the object by the left offset distance and by the right offset distance.

### Description of Figures

In the following description, numerous specific details are set forth to provide a more thorough understanding of the invention. However, it will be apparent to one of skill in the art that the invention may be practiced without one or more of these specific details. In other instances, well-known features have not been described in order to avoid obscuring the invention.

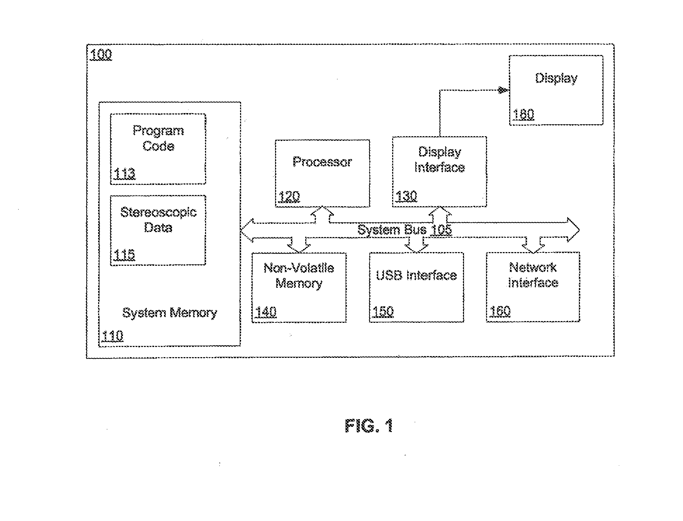

Figure 1 illustrates a system configured to implement one or more aspects of the present invention. As shown, system 100 includes, without imitation, system memory 110, processor 120, display interface 130, non-volatile memory 140, universal serial bus (USB) interface 150, and network interface 160 communicating through system bus 105 as well as display 180 connected to display interface 130. System 100 is an electronic device capable of displaying a stereoscopic image. For example, system 100 may be a laptop computer, a desktop computer, a cellular phone, a digital camera, a PDA, or any other type of handheld or portable device capable of displaying or capturing stereoscopic images.

Processor 120 controls the operation of system 100 and contains logic to execute software programs, such as program code 113. Processor 120 may be a processing unit, such as a central processing unit (CPU), graphics processing unit (GPU), other special purpose processing unit, or programmable logic device.

System memory 110 is an internal memory unit that temporarily stores software instructions to be executed and data to be processed by processor 120. As shown, system memory 110 stores program code 113 and stereoscopic data 115 during the operation of system 100.

Program code 113 includes instructions for controlling the operation of system 100. Program code 113 includes, without limitations, instructions that when executed by processor 120 cause a graphical user interface (GUI) to be displayed on display device 180, apply compression or decompression techniques to stereoscopic data 115, and perform object tracking or object detection operations on stereoscopic data 115. It will be appreciated that program code 113 may include instructions that cause processor 120 to control any other aspects of the operation of system 100 as well, such as, for example, formatting communications over network interface 160 or managing a file-system in non-volatile memory 140.

Stereoscopic image data 115 includes one or more stereoscopic images that each contains pixel data for a left and right stereoscopic image pair. In some embodiments, stereoscopic image data 115 may be stored using the JPEG/Exif image format or other compression format. It will be appreciated that stereoscopic image data 115 may be any data, derived from any source, that is related to an image that can be stored or displayed, including, but not limited to, video data, graphics data, digital photograph data, and the like. Stereoscopic image data 115 may be retrieved from non-volatile memory 140, or may be captured directly from two offset digital image sensors.

Non-volatile memory 140, such as an EEPROM flash memory or hard disk drive, may be used to store any type of data. Program code 113 and stereoscopic data 115 may be stored in non-volatile memory 140 and copied to system memory 110 for execution or processing, respectively. In one embodiment, non-volatile memory 140 includes removable non-volatile memory, such as a Secure Digital (SD) card.

USB interface 150 and network interface 160 facilitate communication between the components internal to system 100 as well as devices external to system 100. In one embodiment, stereoscopic data 115 may be stored on external devices and accessed through USB interface 150 or network interface 160. Data may be transmitted over USB interface 150 using the USB 1 or 2 communications protocols. In different embodiments, network interface 160 may connect to a wired network, such as a network configured for Ethernet (IEEE 802.3), or to a wireless network, such as a network configured for Wi-Fi (IEEE 802.11). It will be appreciated that any type of communications interface known in the art, such as HDMI or IEEE 1394, may be included in system 100, in addition to, or in lieu of, USB interface 150 or network interface 160.

Display interface 130 converts stereoscopic data 115 for display on display 180. In one embodiment, display interface 130 is coupled to processor 120 through system bus 105. In other embodiments, display interface 130 may be coupled to processor 120 through various other communication paths, such as a PCI Express bus or an Accelerated Graphics Port bus.

Display 180 is configured to display stereoscopic images. In one embodiment, display 180 is an LCD screen that includes a parallax barrier. A parallax-barrier is a material having a series of precision slits that is aligned over a conventional LCD screen in order to allow each eye of a viewer to see different pixels when the viewer is at a specific location in front of the display. The parallax barrier allows a viewer to perceive depth in stereoscopic images without the use of special 3D glasses. In another embodiment, display 180 may be an LCD screen that includes a lenticular lens. Stereoscopic displays incorporating a parallax-barrier or a lenticular lens are auto-stereoscopic displays. It will be appreciated that display 180 may be any display system capable of projecting stereoscopic images to a viewer.

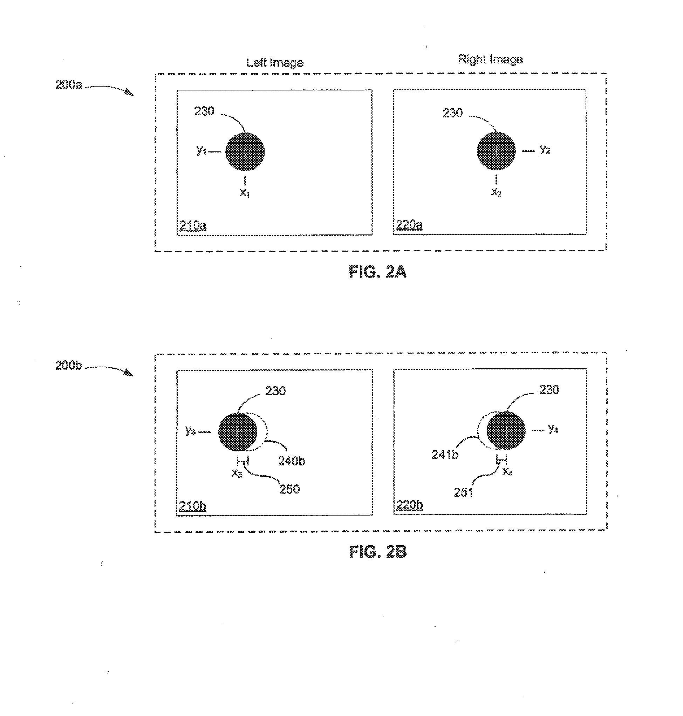

Figure 2A illustrates a stereoscopic image 200a, according to one embodiment of the present invention. Stereoscopic image 200a may be stored in stereoscopic data 115 and displayed on system 100 via display 180. As shown, stereoscopic image 200a includes a left image 210a and a right image 220a that are images of the same scene from two slightly offset camera positions Object 230 is displayed in left image 210a at pixel position (x₁, y₁) and in right image 220a at pixel position (x₂, y₂).

As is well-known, the depth of object 230 in stereoscopic image 200a is dependent on the disparity between the pixel positions associated with object 230 in left image 210a and right image 220a. If object 230 is further away from the cameras' positions, little or no disparity will exist between the pixel positions of object 230 in left image 210a and right image 220a. Alternatively, if object 230 is closer to the cameras' positions, a larger disparity will exist between the pixel positions of object 230 in left image 210a and right image 220a. As shown, the disparity between the pixel positions of object 230 is given by the difference between x₁ and x₂ (y₁ = y₂).

Figure 2B illustrates a modified stereoscopic image 200b, according to one embodiment of the present invention. Modified stereoscopic image 200b includes modified left image 210b and modified right image 220b. Object 230 is displayed in modified left image 210b at pixel position (x₃, y₃) and in modified right image 220b at pixel position (x₄, y₄).

Modified stereoscopic image 200b is a modified version of stereoscopic image 200a, where the disparity in the pixel positions of object 230 in modified left image 210b and modified right image 220b is larger than the disparity in the pixel positions of object 230 in left image 210a and right image 220a. More specifically, the pixel positions of object 230 in left image 210a are offset from the pixel positions of object 230 in modified left image 210b by a left offset distance 250 given by x₁ - x₃. Similarly, the pixel positions of object 230 in right image 220a are offset from the pixel positions of object 230 in modified right image 220b by a right offset distance 251 given by X₄ - X₂.

In this example, the disparity between the pixel positions of object 230 in stereoscopic image 200b is larger than the disparity between the pixel positions of object 230 in stereoscopic image 200a (i.e. (x₄ ― x₃) > (x₂ ― x₁)). Thus, when displayed on system 100 via display 180, the viewer perceives the increased disparity of the pixel positions of object 230 in stereoscopic image 200b as bringing object 230 closer to the viewer. In this fashion, that is, by changing the relative disparity of the pixel positions of an object across a stereoscopic image pair, the perceived depth of the object in the stereoscopic image can be changed. To highlight a particular object for a viewer, the relative disparity of the pixel positions of that object across a stereoscopic image pair can be increased or decreased, moving that object "closer" to or "further away" from the viewer in the stereoscopic image in order to focus the viewer's attention on the object.

System 100 may implement the execution of selection of object 230 either manually in response to user input or automatically. In one embodiment, system 100 prompts the viewer to select the object or objects the viewer wishes to highlight. Then, one of the various object detection algorithms well-known in the art, such as the Viola-Jones object detection framework, is used to select the object or objects in response to the user input. For example, system 100 could require the user to manually select an object or objects in stereoscopic image 200a using a mouse or touch screen. In alternative embodiments, system 100 may be configured to select the object or objects automatically, without user input. For example, system 100 could be configured to automatically detect a face in stereoscopic image 200a.

Figure 2B also shows previously occluded pixels 240b and 241 b in modified left image 210b and modified right image 220b, respectively. These pixels correspond to pixel positions that are associated with object 230 in stereoscopic image 200a, but not associated with object 230 in modified stereoscopic image 200b. Pixels 240b and 241 b may remain unmodified, or pixels 240b and 241 b may be modified by any technically feasible technique. Such techniques may include scaling object 230 in the modified left image 210b and modified right image 220b such that pixels 240b and 241 b are at least partially occluded by the pixels of scaled object 230, replacing pixels 240b and 241 b with a flat color, replacing pixels 240b or 241 b with pixels in right image 220a or left image 210a, respectively, or copying pixels immediately adjacent to pixels 240b and 241 b to the pixel positions corresponding to previously occluded pixels 240b and 241 b. In alternative embodiments, pixels 240b or 241 b may be made partially transparent such that a ghost of original object 230 remains in modified stereoscopic image 200b.

It will be appreciated that system 100 may be implemented such that one or more objects may be selected and moved depth-wise within stereoscopic image 200a. In addition, the depth of one object may be adjusted independently of the depth of a second object. For example, system 100 could be configured to move one object to the foreground of stereoscopic image 200a, while simultaneously moving all other objects into the background of stereoscopic image 200a.

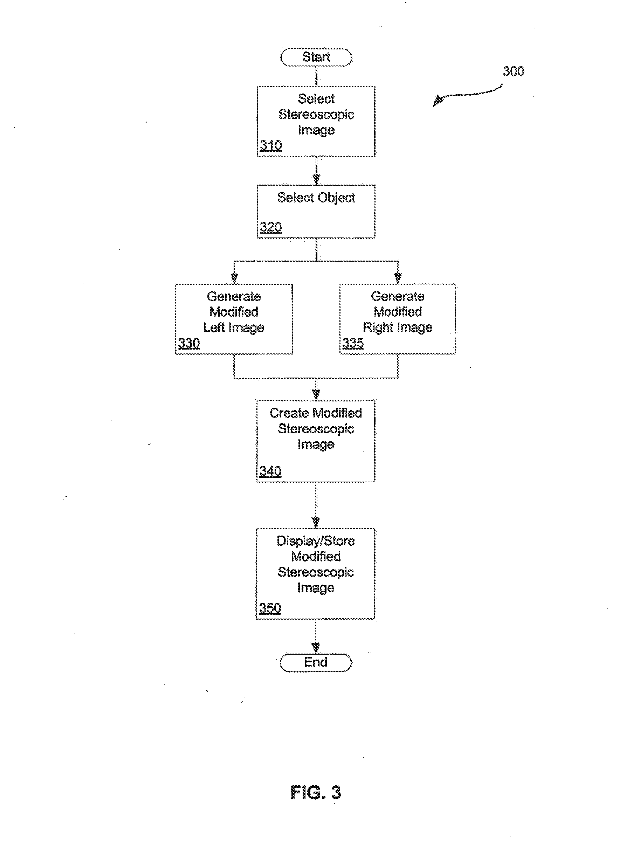

Figure 3 is a flowchart of method steps for highlighting an object in a stereoscopic image, according to one embodiment of the present invention. Although the method steps are described in conjunction with the system of Figures1-2B, persons skilled in the art will understand that any system configured to perform the method steps, in any order, falls within the scope of the present invention.

The method begins at step 310, where processor 120 selects stereoscopic image 200a from within stereoscopic data 115. Stereoscopic image 200a includes left image 210a and right image 220a.

At step 320, processor 120 selects object 230 to be tracked or highlighted for the viewer in stereoscopic image 200a. Again, any type of object detection algorithm that is known in the art may be used to identify the pixels in left image 210a and right image 220a that are associated with object 230. In alternative embodiments, system 100 may include a mechanism to allow a viewer to manually select object 230 in stereoscopic image 200a, or system 100 may be configured to automatically select object 230 in stereoscopic image 200a using software in program code 113.

It may be appreciated that step 320 is not limited to selecting a single object in a stereoscopic image and that the simultaneous selection of multiple objects falls within the scope of the present invention. For example, an object detection algorithm that selects one face in stereoscopic image 200a could also be applied to select multiple faces in stereoscopic image 200a.

At step 330, processor 120 or display interface 130 generates a modified left image 210b that is a modified version of left image 210a. Again, modified left image 210b is a copy of left image 210a, except that the pixel positions of object 230 in modified left image 210b are moved from the pixel positions of object 230 in left image 210a by a left offset distance 250.

Similarly, at step 335, processor 120 or display interface 130 generates a modified right image 220b that is a modified version of right image 220a. Like modified left image 210b, modified right image 220b is a copy of right image 220a, except that the pixel positions of object 230 in modified right image 220b are moved from the pixel positions of object 230 in right image 220a by a right offset distance 251.

Also, in both steps 330 and 335, processor 120 or display interface 130, as the case may be, may leave previously occluded pixels 240b and 241 b unmodified or may modify previously occluded pixels 240b and 241 b by any technically feasible method known in the art, as previously described herein.

At step 340, processor 120 or display interface 130 combines the modified left image 21 0b and the modified right image 220b to generate a modified stereoscopic image 200b. At step 350, system 100 displays modified stereoscopic image 200b by transmitting modified stereoscopic image 200b to display interface 130 for display on display 180. In alternative embodiments, system 100 may store modified stereoscopic image 200b as stereoscopic data 115 on non-volatile memory 140. In other alternative embodiments, system 100 may transmit modified stereoscopic image 200b as stereoscopic data 115 to an external device using USB interface 150 or network interface 160.

It will be appreciated that any object highlighted in a stereoscopic image by the steps disclosed in method 300 may be tracked in consecutive stereoscopic images containing that particular object. Various methods for tracking objects in successive images are well-known in the art and may be employed in system 100 to track a highlighted object between consecutive stereoscopic images. Such tracking feature also falls within the scope of the present invention.

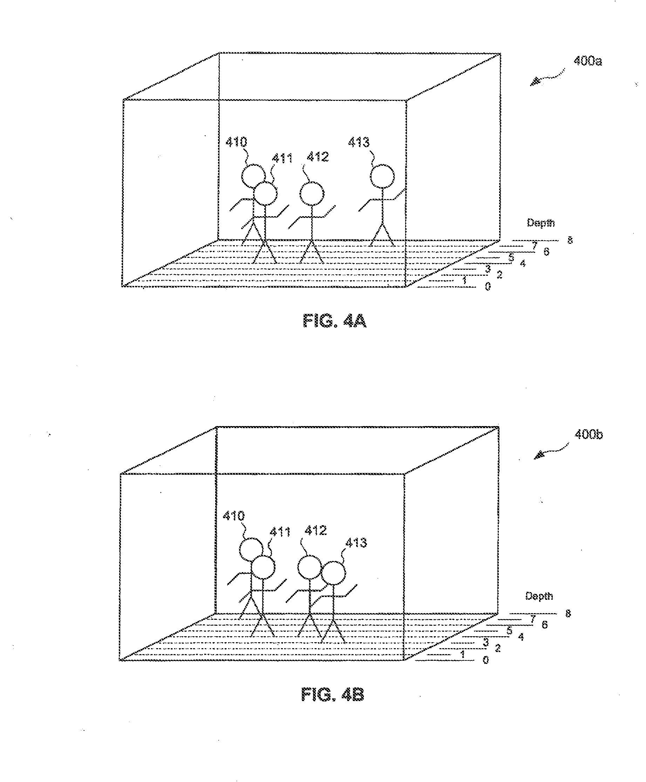

Figures 4A-4D illustrate various techniques for adjusting the depth of objects in a stereoscopic image 400a, according to different embodiments of the present invention. As shown in Figure 4A, stereoscopic image 400a includes four objects 410, 411, 412 and 413 depicting people located at various depths in a scene. Depth 0 corresponds to the foreground of stereoscopic image 400a, and depth 8 corresponds to the background of stereoscopic image 400a. Objects 410 and 413 are located at depth 7, and objects 411 and 412 are located at depth 4. For illustrative purposes only, each depth may represent a different amount of disparity between the pixels in the left and right stereoscopic image pair. For example, objects 410 and 413 are located at depth 7, which corresponds to objects having a disparity between corresponding pixels in the left and right stereoscopic image pair of one pixel position. In contrast, objects 411 and 412 are located at depth 4, which corresponds to objects having a disparity between corresponding pixels of four pixel positions.

In one embodiment, system 100 may be configured to move a selected object to a depth in the stereoscopic image 400 such that the selected object appears to be one depth layer in front of any other related objects in the image. For example, as shown in Figure 4B, where object 413 is the selected object, the depth of selected object 413 is adjusted such that object 413 appears in front of the other objects in the image. As shown, object 413 is moved from depth 7 to depth 3 in a modified stereoscopic image 400b. In order to generate the modified stereoscopic image 400b, processor 120 or display interface 130 modifies stereoscopic image 400a such that pixels corresponding to object 413, which have a disparity of one pixel in the stereoscopic image 400a, have a disparity of five pixels in the modified stereoscopic image 400b.

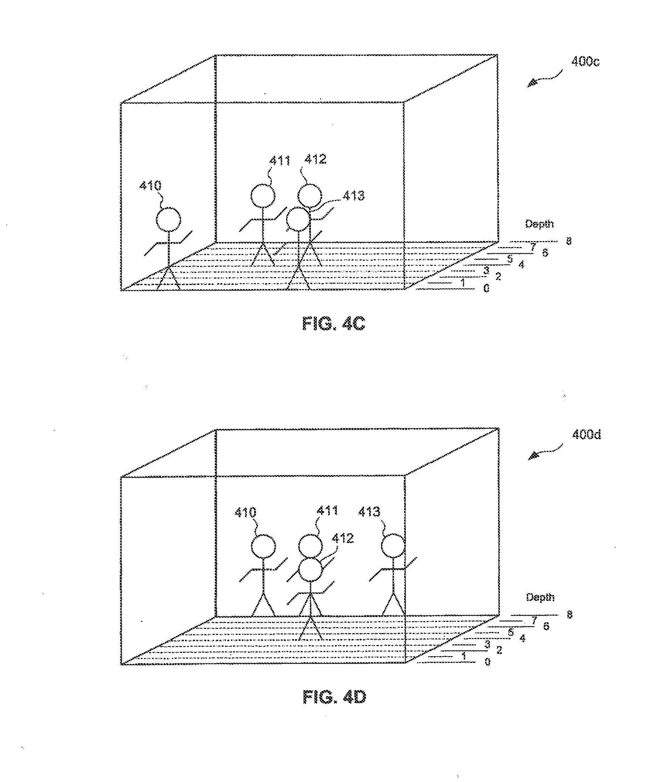

In alternative embodiments, system 100 may be configured to move one or more selected objects to the foreground of the scene 400. For example, as shown in Figure 4C, where objects 410 and 413 are the selected objects, the depths of selected objects 410 and 413 are adjusted such that objects 410 and 413 appear in the foreground of modified stereoscopic image 400c. In yet other embodiments, system 100 may be configured to move unselected objects in a scene to the background of the stereoscopic image. For example, as shown in Figure 4D, where object 412 is the selected object, the depths of objects 410, 411, and 413 are adjusted such that only the selected object 412 appears in front of the background in the modified stereoscopic image 400d. Selected object 412 remains at depth 4 in modified stereoscopic image 400d, the original depth of object 412 in unmodified stereoscopic image 400a. However, the other objects in the scene, objects 410, 411, and 413, are moved to depth 8, which is the background of the modified stereoscopic image 400d. Thus, the selected object is the only object in the modified stereoscopic image 400d that appears to have depth while all other objects appear to be flat against the background.

It will be appreciated that the techniques for modifying the depths of objects in stereoscopic image 400a described herein may be repeated for successive frames in a stereoscopic video. In this manner, the depth of an object in a stereoscopic video may be adjusted to highlight that object in the video. In one embodiment, the depth of the object may be changed abruptly from an initial depth to a modified depth. In alternative embodiments, the depth of the object may be changed during a transition over a plurality of frames such that the object appears to gradually change depth.

In addition, the focus of the viewer's attention may be moved between different objects in a stereoscopic video. For example, one object, such as a first person in a conversation, may be selected for a first number of frames and then, a second object, such as a second person in that same conversation, may be selected for a second number of frames subsequent to the first number of frames. In this manner, the viewer's focus is first drawn to the first person at one point in the stereoscopic video and then to the second person at a subsequent point in the stereoscopic video.

It will also be appreciated that system 100 may be configured to implement object tracking in stereoscopic video by selecting and adjusting the depth of objects in a sequence of stereoscopic images. For example, system 100 may include devices configured to enable users to participate in video teleconferences, such as digital video cameras capable of recording stereoscopic video and microphones for recording audio. During operation, system 100 may be configured to focus a viewer's attention on any person that is speaking in the video teleconference using any of the techniques described herein, including, without limitation, selecting a person who has been identified as speaking and moving that person forward in depth in the sequence of stereoscopic frames making up the stereoscopic video. System 100 may employ any technically feasible technique to determine when a person in the stereoscopic video is speakiing. For example, a person may be identified as speaking by detecting mouth movement, tracking the eye movements of people within the video, or using directional microphones to locate the person who is the most likely source of the sound in the video.

Again, when tracking objects in a stereoscopic video, system 100 may be configured to analyze a sequence of stereoscopic images that makeup the frames of the stereoscopic video to determine whether a particular person is speaking. For example, if system 100 detects that a person's mouth is moving for more than a threshold number of frames in the stereoscopic video, system 100 may be configured to automatically select that person as the speaker. System 100 may then bring the selected speaker forward in depth in the stereoscopic video so that the viewer's attention is focused on that speaker. In one embodiment, where there are multiple parties to a conversation, system 100 may be configured to select only the one person who is speaking and bring that person forward in depth in the stereoscopic video. Thus, only the active speaker in the conversation is ever moved forward in depth of the stereoscopic video so that the viewer's attention is focused only on each active speaker. In alternative embodiments, system 100 may be configured to select any person identified as a party to a conversation and keep all parties to the conversation highlighted even when a particular party is no longer the active speaker. Thus, system 100 may be configured to focus a viewer's attention on all parties to a conversation, and not just the active speakers.

In yet another implementation, system 100 may be configured to focus a viewer's attention on any objects that interact with or are associated with a particular object in a stereoscopic video. For example, system 100 may be configured to select the player in a sporting event that is closest to the ball, such as a football player carrying or catching a football or a soccer player dribbling or kicking a soccer ball. In these types of cases, the viewer's attention is focused on the players that are involved in play around the ball. In the case of a football game, for example, a play may begin with the football, center and quarterback being selected and brought forward in depth in the stereoscopic video. As the play progresses and the quarterback hands the ball to a runningback, the quarterback and center are returned to their original depths in the unmodified stereoscopic video, and the running back is selected and brought forward in depth in the stereoscopic video. In this manner, system 100 may be employed to focus the user's attention on the most important persons in a given sequence of play.

In sum, the approach disclosed above provides an effective and inconspicuous mechanism for tracking and highlighting an object in a stereoscopic image. More specifically, the present application discloses a technique for highlighting the representation of an object in a stereoscopic image by changing the depth of the object. A stereoscopic image is processed using an object detection algorithm to select the pixels associated with the object in the image. The depth of the object is adjusted in the stereoscopic image by adjusting the disparity between the pixels associated with the object in the left and right stereoscopic image pair. The processed stereoscopic image is then displayed on a stereoscopic display or stored in memory. An object is tracked by highlighting the object in consecutive stereoscopic images that depict the object.

One advantage of the disclosed approach is that by changing the depth of the highlighted object, the viewer's focus is shifted to the object without adding a distracting graphical overlay that was not in the original image or altering the object such as by changing its color. In addition, by refraining from adding a graphical overlay to the image, the creation of depth artifacts introduced by the graphical overlay is avoided.

While the foregoing is directed to embodiments of the present invention, other and further embodiments of the present invention may be devised without departing from the basic scope thereof. For example, aspects of the present invention may be implemented in hardware or software or in a combination of hardware and software. One embodiment of the present invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Such computer-readable storage media, when carrying computer-readable instructions that direct the functions of the present invention, are embodiments of the present invention.

In view of the foregoing, the scope of the present invention is determined by the claims that follow.

## Claims

1. A method comprising:
selecting the object within the stereoscopic image;
generating a modified left image by moving the object by a left offset distance from an initial position within the left image;
generating a modified right image by moving the object by a right offset distance from an initial position within the right image; and
generating a modified stereoscopic image based on the modified left image and the modified right image,
wherein a perceived depth of the object within the stereoscopic image changes on account of moving the object by the left offset distance and by the right offset distance.

2. The method of claim 1, further comprising displaying the modified stereoscopic image on a stereoscopic display.

3. The method of claim 2, wherein the stereoscopic display comprises an auto-stereoscopic display not requiring an end-user to wear 3D glasses.

4. The method of any preceding claim, further comprising storing the modified stereoscopic image in memory.

5. The method of any preceding claim, wherein the stereoscopic image comprises part of a stream of video frames.

6. The method of any preceding claim, wherein the step of selecting the object within the stereoscopic image further comprises detecting the object using an object detection algorithm.

7. The method of any preceding claim, further comprising:
selecting the object within a second stereoscopic image;
generating a second modified left image by moving the object by the left offset distance from an initial position within the second left image;
generating a second modified right image by moving the object by the right offset distance from an initial position within the second right image; and
generating a second modified stereoscopic image based on the second modified left image and the second modified right image,
wherein a perceived depth of the object within the second modified stereoscopic image changes on account of moving the object by the left offset distance and by the right offset distance.

8. A computer-readable medium including instructions that when executed by a processor cause the processor to perform the steps of a method according to any preceding claim.

9. A computing device comprising.
a processing unit configured to perform a method according to any of claims 1 to 7.
